# FASCICULE DE BREVET EUROPEEN

(11) **EP 3 044 841 B1**
(45) Date de publication et mention de la délivrance du brevet: **05.07.2017**
(21) Numéro de dépôt: 14766135.9
(22) Date de dépôt: 09.09.2014
(51) Int. Cl.: H02B 13/045, H02G 5/06, H02B 13/00, H02B 13/035

(54) **MODULE DE CONDUCTEUR MONOPHASE ET JONCTION DE CONDUCTEURS MONOPHASES EQUIPEE DE CES MODULES**
EINPHASENLEITERMODUL UND EINPHASENLEITERANSCHLUSS MIT DIESEN MODULEN
SINGLE-PHASE CONDUCTOR MODULE AND SINGLE-PHASE CONDUCTOR JUNCTION EQUIPPED WITH SAID MODULES

(30) Priorité: 09.09.2013 FR 1358642
(43) Date de publication de la demande: 20.07.2016
(73) Titulaire: ALSTOM Technology Ltd, 5400 Baden (CH)
(72) Inventeur: DE BRITO, Luis, F-74940 Annecy le Vieux (FR); SERAIN, Mathias, F-73190 St-Baldoph (FR)
(74) Mandataire: Brevalex
(86) Numéro de dépôt international: PCT/EP2014/069133
(87) Numéro de publication internationale: WO 2015/032957

(56) Documents cités:
- DE-A1- 3 546 011
- DE-A1- 4 320 906
- DE-A1-102007 006 729

## Description

Le sujet de l'invention est un module de conducteur monophasé, ainsi qu'une jonction de conducteurs monophasés équipée de ces modules.

Elle est prévue pour des appareillages à moyenne ou haute tension isolés au gaz, les modules comprenant alors une cuve ou enveloppe extérieure contenant chacune un des conducteurs monophasés et délimitant un compartiment gazeux isolé de l'atmosphère extérieure. Parmi les modules auxquels l'invention peut être appliquée, on citera les disjoncteurs, les sectionneurs, les TC (Transformateurs de Courant), les dispositifs en croix, coudes et viroles. En raison de la complexité de forme de ces modules, une fabrication par fonderie est normalement choisie. Les modules sont raccordés à d'autres modules de l'appareillage, dans lesquels les conducteurs se prolongent en traversant des ouvertures des cuves, par lesquelles les modules sont raccordés. Des dispositifs d'étanchéité isolent toutefois les compartiments gazeux dans la chaîne de modules, et ces compartiments sont munis d'équipements tels que de surveillance de la pression du gaz, de remplissage en gaz ou de rupture en cas de surpression excessive.

L'invention est plus particulièrement intéressante pour des appareillages multiphasés, où plusieurs des conducteurs monophasés s'étendent dans des chaînes de modules disposés en parallèle. Il arrive alors que des jonctions des cuves de conducteurs monophasés voisins soient recherchées, de manière à faire communiquer leurs compartiments gazeux et d'obtenir ainsi un compartiment gazeux unique s'étendant sur toute la jonction, ce qui permet de simplifier l'appareillage, en utilisant un seul exemplaire des équipements cités ci-dessus, au lieu d'un sur chacun des modules.

L'art antérieur comprend un collecteur monobloc pour appareillage triphasé comprenant trois portions de cuve, recevant chacune une longueur d'un des conducteurs monophasés, et des tubes faisant communiquer les intérieurs des cuves. Ce collecteur est toutefois une pièce de forme complexe, conçue spécialement pour les endroits où la jonction est souhaitée. Le gain économique procuré par la diminution du nombre d'équipements, par rapport aux appareillages sans jonction est balancé par le coût de ce collecteur, la fabrication de grosses pièces en fonderie étant très désavantageuse.

On a aussi relié des modules par des tuyauteries souples. Ici encore, on atteignait l'objectif de pouvoir diminuer le nombre d'équipements par rapport à des modules sans jonction, mais l'étanchéité de l'ensemble était plus difficile à assurer.

Et DE 10 2007 006 729 A décrit des modules de conducteurs pourvus de bossages latéraux de jonction de forme complémentaire, mais qui, contrairement à l'invention, restent toujours ouverts et ne permettent donc pas commodément de laisser les modules séparés, puisqu'ils restent ouverts.

Le but de l'invention est d'offrir une jonction de modules de conducteurs monophasés, de façon particulièrement économique, et sans complication excessive pour assurer l'étanchéité. Toutefois, on veut aussi que les modules puissent être employés séparément si on le souhaite, et donc rester libre entre ces deux options. Elle concerne d'abord un module apte à entrer dans une telle jonction, comme défini par la revendication 1.

Le module de l'invention peut alors être utilisé tel quel, dans les situations où le compartiment gazeux reste isolé. Mais si une jonction est voulue, les bossages opposés de deux desdits modules sont percés, aboutés par leurs faces d'extrémité et assemblés. On aboutit alors à une solidarisation des modules et une communication de leurs compartiments gazeux de façon simple et peu coûteuse, sans collecteur ni aucune pièce spéciale. Les faces d'extrémités raccordées ayant des formes complémentaires, elles viennent à se toucher sur toute leur superficie et l'étanchéité du raccordement est facile à assurer. Il est à noter que les bossages aux extrémités de la jonction, qui ne sont raccordés à aucun autre module, ne subissent pas de perçage ni d'autre usinage et restent intacts.

Les divers aspects, caractéristiques et avantages de l'invention seront maintenant décrits plus en détail au moyen des Figures suivantes, qui en illustrent des modes de réalisation non exclusifs d'autres :
- la Figure 1 représente un module conforme à l'invention à l'état initial ;
- la Figure 2 représente ce module préparé pour une jonction ;
- la Figure 3 illustre une jonction ;
- les Figures 4 et 5 illustrent les modes d'assemblage ; et
- la Figure 6 illustre un autre mode de réalisation de l'invention.

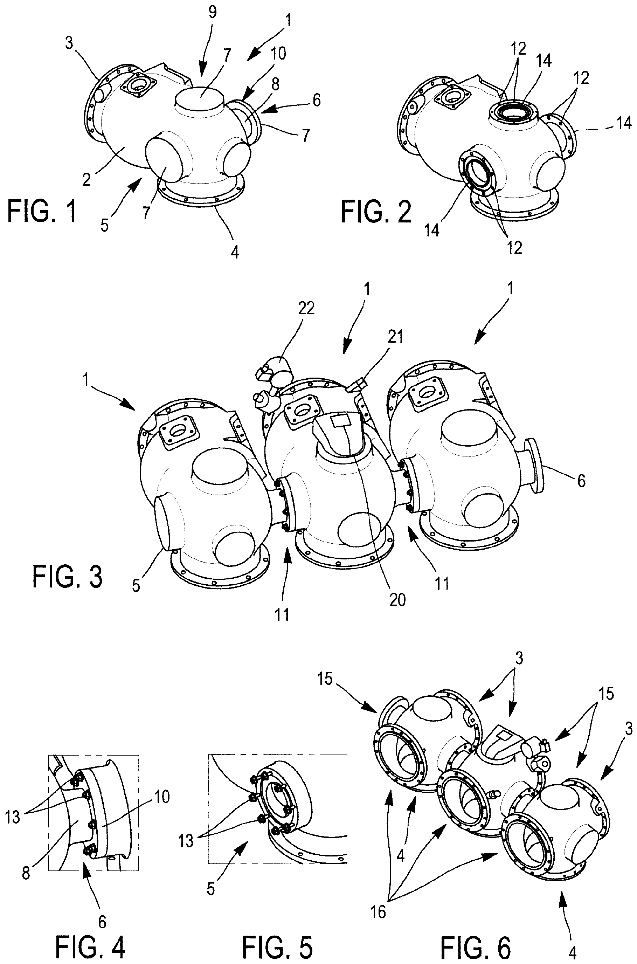

Un module 1 équipé de l'invention comprend, d'après la Figure 1, une cuve 2, dans laquelle un conducteur monophasé est contenu. La cuve 2 comprend deux ouvertures 3 et 4, ici à un angle droit, destinées au passage du conducteur, qui s'étendra selon les lignes pointillées d'axe de ces ouvertures 3 et 4, en faisant ici un angle. Les ouvertures 3 et 4 sont munies de brides de boulonnage à des brides correspondantes d'autres éléments en prolongement de l'appareillage. Le module 1 est presque symétrique par rapport à un plan médian défini par les axes des ouvertures 3 et 4, et dans lequel s'étend le conducteur monophasé. Sur les côtés du module 1, et de part et d'autre du plan médian, on trouve deux bossages 5 et 6 aptes à former des piquages de pression et qui comprennent tous deux une face d'extrémité 7 continue et plane. Les bossages 5 et 6 saillent de la cuve 2 vers l'extérieur dans des sens opposés, et sont alignés. Ils peuvent être massifs ou au contraire concaves vers la cuve 2 ; ils sont toutefois continus et donc étanches à l'état initial.

Des troisièmes bossages 9 de piquage de pression sont encore établis, sur le plan médian du module 1, entre les ouvertures 3 et 4, et aussi entre les premiers bossages de piquage de pression 5 et 6. Ils possèdent aussi une face d'extrémité 7 continue et plane. Alors que les bossages 5 et 9 sont représentés cylindriques, les bossages 6 se distinguent en ce que la face d'extrémité 7 est sur une collerette 10. Les bossages 5 et 6 opposés ont un même rayon à leurs faces d'extrémité 7, les bossages 6 étant plus fins à la gorge 8 de raccordement de la collerette 10 à la cuve 2.

On passe aux commentaires des Figures 2 et 3. La jonction de trois conducteurs monophasés comprend trois modules 1 contigus et attachés les uns aux autres. Les bossages 5 et 6 des trois modules 1 sont tous en alignement, et deux paires 11, comprenant chacune un bossage 5 et un bossage 6 aboutés, s'étendent entre les modules 1 consécutifs. Les bossages 5 et 6 des paires 11 ont été usinés, d'après la Figure 2, en les perçant à partir des faces d'extrémité 7 jusqu'au compartiment gazeux à travers la cuve 2, et en ménageant, autour des évidements 14 obtenus, d'autres perçages 12 sur les parties subsistantes des faces d'extrémité 7. Ces perçages 12, qui peuvent être taraudés ou non, sont destinés à recevoir des boulons 13 d'assemblage des modules 1 par les paires 11. Des joints d'étanchéité, non représentés, sont intercalés entre les bossages 5 et 6 des paires 11. Les trois modules 1 ont alors un compartiment gazeux commun, étanche à l'égard de l'extérieur, puisque les bossages 5 et 6 aux extrémités de l'alignement, qui n'appartiennent à aucune des paires 11, restent intacts.

Un des troisièmes bossages 9 est usiné de la même façon, en y formant un évidement 14 et des perçages 12 de fixation, afin d'y ajuster un équipement tel qu'un disque de rupture 20 contre les surpressions dans le compartiment gazeux commun aux modules 1 assemblés. D'autres équipements tels qu'une vanne de remplissage 21 du compartiment gazeux et un densistat 22 (équipement de surveillance de la pression du compartiment) sont installés aussi, à un seul exemplaire chacun. Ces équipements peuvent être concentrés sur un seul des modules 1 (ce qu'on a représenté ici), ou, au contraire, répartis sur plusieurs d'entre eux, et présents ou non sur les troisièmes bossages 9.

La Figure 5 montre que les perçages 12 usinés dans les bossages 5 cylindriques sont taraudés et reçoivent donc les tiges filetées des boulons 13 ; les collerettes 10 des bossages 6 opposés sont traversées par les mêmes tiges à leurs perçages 12 (Figure 4), ce qui permet aux boulons 13 de brider la collerette 10 sur le bossage 5 cylindrique.

La Figure 6 illustre un autre mode de réalisation, où les modules, maintenant 15, présentent une ouverture 16 supplémentaire dans le prolongement d'une des ouvertures 3 déjà rencontrées ; il s'agit de modules en forme de croix, permettant une bifurcation des conducteurs monophasés et auxquels l'invention peut encore s'appliquer, la troisième ouverture 16 appartenant aussi au plan médian mentionné.

On parvient donc, en employant l'invention, à disposer d'un modèle unique de modules pour les endroits dépourvus de jonction comme les endroits à jonction, avec la possibilité de produire les modules 1 ou 15 en plus grande série et à moindre coût, en étant prêt à recourir à des opérations ultérieures d'usinage simples, et donc peu coûteuses elles aussi, pour ouvrir les bossages 5, 6 et 9. Les jonctions des modules 1 ou 15 sont rigides et facilement rendues étanches.

## Revendications

1. Module (1, 15) de conducteur monophasé pour un appareillage à moyenne ou haute tension isolé au gaz, comprenant une cuve contenant le conducteur dans un compartiment gazeux, comprenant, de deux côtés opposés d'un plan médian dans lequel le conducteur s'étend, établis sur la cuve, des bossages (5, 6) aptes à former des piquages de pression, saillant vers l'extérieur de la cuve, **caractérisé en ce que** lesdits bossages (5, 6) sont continus, une étanchéité de la cuve avec un milieu extérieur étant maintenue à travers eux, et comprennent des faces d'extrémité (7) de formes complémentaires et également continues.

2. Module de conducteur monophasé suivant la revendication 1, **caractérisé en ce que** les faces d'extrémité (7) sont planes.

3. Module de conducteur monophasé suivant la revendication 1 ou 2, **caractérisé en ce que** les bossages (5, 6) sont alignés.

4. Module de conducteur monophasé suivant l'une quelconque des revendications 1 à 3, **caractérisé en ce que** la face d'extrémité (7) d'un des piquages au moins forme une collerette (10).

5. Module de conducteur suivant l'une quelconque des revendications 1 à 4, **caractérisé en ce qu'**il comprend, sur le plan médian, un troisième bossage (9) de piquage de pression établi sur la cuve, saillant vers l'extérieur de la cuve et comprenant une face d'extrémité (7) plane et continue.

6. Jonction de conducteurs monophasés dans un appareillage à moyenne ou haute tension isolé au gaz, **caractérisée en ce qu'**elle est formée par des modules conformes à l'une quelconque des revendications 1 à 5, les bossages (5, 6) de piquage de pression étant en alignement et comprenant des paires (11) aboutées, les bossages desdites paires (11) ayant été usinés pour les ouvrir en mettant les intérieurs des modules en communication, deux des bossages de piquage de pression, n'appartenant à aucune des paires et situées à des extrémités de l'alignement, gardant continue la face d'extrémité.

7. Jonction de conducteurs monophasés suivant la revendication 6, **caractérisée en ce que** les bossages desdites paires (11) ont aussi été usinés pour ménager des perçages (12) de boulons (13) qui attachent les modules entre eux.

8. Jonction de conducteurs monophasés suivant l'une quelconque des revendications 6 ou 7, **caractérisée en ce qu'**elle comprend un seul exemplaire d'équipements (20, 21, 22) comprenant un densistat, une vanne de remplissage ou un disque de rupture.

9. Jonction de conducteurs monophasés suivant la revendication 8, les modules étant conformes à la revendication 5, **caractérisé en ce qu'**un des équipements au moins est situé sur un au moins des troisièmes bossages (9), qui a été usiné pour l'ouvrir.

## Patentansprüche

1. Einphasenleitermodul (1, 15) für ein gasisoliertes Mittel- oder Hochspannungsgerät, umfassend ein Gefäß, das den Leiter in einem Gasfach enthält, umfassend auf zwei entgegengesetzten Seite einer Mittelebene, in der sich der Leiter erstreckt, Vorsprünge (5, 6), die auf dem Gefäß vorgesehen und dazu ausgelegt sind, Druckabzweigstellen zu bilden, die zur Außenseite des Gefäßes hin vorstehen, **dadurch gekennzeichnet, dass** die Vorsprünge (5, 6) durchgehend sind, wobei eine Abdichtung des Gefäßes mit einer Außenumgebung durch sie beibehalten wird, und dass sie Endflächen (7) mit komplementären Formen umfassen, die ebenfalls durchgehend sind.

2. Einphasenleitermodul nach Anspruch 1, **dadurch gekennzeichnet, dass** die Endflächen (7) flach sind.

3. Einphasenleitermodul nach Anspruch 1 oder 2, **dadurch gekennzeichnet, dass** die Vorsprünge (5, 6) ausgerichtet sind.

4. Einphasenleitermodul nach einem der Ansprüche 1 bis 3, **dadurch gekennzeichnet, dass** die Endfläche (7) wenigstens einer Abzweigung einen Kragen (10) bildet.

5. Leitermodul nach einem der Ansprüche 1 bis 4, **dadurch gekennzeichnet, dass** es an der Mittelebene einen an dem Gefäß vorgesehenen dritten Vorsprung (9) zur Druckabzweigung umfasst, der zur Außenseite des Gefäßes hin vorsteht und eine flache und durchgehende Endfläche (7) umfasst.

6. Einphasenleiteranschluss in einem gasisolierten Mittel- oder Hochspannungsgerät, **dadurch gekennzeichnet, dass** es durch Module nach einem der Ansprüche 1 bis 5 gebildet ist, wobei die Vorsprünge (5, 6) zur Druckabzweigung ausgerichtet sind und verbundene Paare (11) umfassen, wobei die Vorsprünge der Paare (11) dazu gefertigt worden sind, sie zu öffnen und hierbei die Innenräume der Module in Verbindung miteinander zu bringen, wobei zwei der Vorsprünge zur Druckabzweigung, die zu keinem der Paare gehören und an den Enden der Ausrichtung angeordnet sind, die Endfläche durchgehend halten.

7. Einphasenleiteranschluss nach Anspruch 6, **dadurch gekennzeichnet, dass** die Vorsprünge der Paare (11) ferner dazu gefertigt worden sind, Bohrungen (12) für Schrauben (13) aufzunehmen, die die Module miteinander verbinden.

8. Einphasenleiteranschluss nach einem der Ansprüche 6 oder 7, **dadurch gekennzeichnet, dass** er ein einziges Exemplar von Geräten (20, 21, 22) umfasst, umfassend einen Densistat, ein Füllventil oder eine Berstscheibe.

9. Einphasenleiteranschluss nach Anspruch 8, wobei die Module gemäß Anspruch 5 sind, **dadurch gekennzeichnet, dass** wenigstens eines der Geräte an wenigstens einem der dritten Vorsprünge (9) angeordnet ist, der dazu gefertigt worden ist, ihn zu öffnen.

## Claims

1. Single phase conducting module (1, 15) for medium or high voltage gas insulated switchgear, comprising a tank containing the conductor in a gas-filled compartment, comprising bosses (5, 6) on the tank, on two opposite sides of a median plane in which the conductor lies, to form pressure connections extending outwards from the tank, **characterised in that** said bosses (5, 6) are continuous, leak tightness between the tank and an external medium being maintained through these bosses, and comprising end faces (7) with complementary and continuous shapes.

2. Single phase conducting module according to claim 1, **characterised in that** the end faces (7) are plane.

3. Single phase conducting module according to claim 1 or 2, **characterised in that** the bosses (5, 6) are in line.

4. Single phase conducting module according to any one of claims 1 to 3, **characterised in that** the end face (7) of at least one of the connections forms a collar (10).

5. Conducting module according to any one of claims 1 to 4, **characterised in that** it comprises a third pressure connection bushing (9) on the median plane of the tank, projecting outwards from the tank and comprising a plane and continuous end face (7).

6. Junction of single phase conductors in medium or high voltage gas insulated switchgear, **characterised in that** it is formed by modules according to any one of claims 1 to 5, the pressure connection bosses (5, 6) being in line with each other and comprising connecting pairs (11), the bosses of said pairs (11) having been machined to open them up creating communication between the interior of the modules, two of the pressure connection bosses not being paired and located at the ends of the line keeping the end face continuous.

7. Junction of single phase conductors according to claim 6, **characterised in that** the bosses of said pairs (11) have also been machined to form drillings (12) for bolts (13) that attach the modules to each other.

8. Junction of single phase conductors according to either claim 6 or 7, **characterised in that** it comprises a single set of equipment (20, 21, 22) comprising a densistat, a filling valve or a rupture disk.

9. Junction of single phase conductors according to claim 8, the modules complying with claim 5, **characterised in that** at least one of the pieces of equipment is located on at least one of the third bosses (9) that has been machined to open it up.
